# EUROPEAN PATENT APPLICATION

(11) **EP 1 674 180 A1**
(43) Date of publication of application: **28.06.2006**
(21) Application number: 05257518.0
(22) Date of filing: 07.12.2005
(51) Int. Cl.: B23B 49/02

(54) **A drilling aid device, a kit and packaging therefore and a pack**

(30) Priority: 21.12.2004 GB 0427911
(71) Applicant: Creative Engineering Products Ltd., Hertfordshire AL1 4TU (GB)
(72) Inventor: Patterson, Clive Edward, Hertfordshire AL1 4TU (GB)
(74) Representative: Eke, Philippa Dianne

(57) **Abstract**

A drilling aid device 2 for guiding drill bits comprises a planar base 4 having a circular opening 6 through which, from a first end to a second end thereof, a drill bit is adapted to pass, the axis of the opening being perpendicular to the plane of the base; wherein the planar base is provided with a series of channels 10 which are adapted to carry applied lubricant towards the second end of the circular opening; wherein the planar base is provided with a plurality of indents or apertures 8 positioned in the plane of the base and located at pre-determined intervals about the axis of the opening to assist in positioning the device; and wherein the planar base is provided with a single annular protrusion or a series of stacked annular protrusions 14, 16, 18, which protrusions are concentric with the circular opening to act as a collar for guiding a drill bit, particularly a diamond drill bit.

## Description

The present invention relates to a drilling aid device and kit and packaging therefor. It also relates to a pack of drilling aid devices. In particular, it relates to a device for guiding drill bits into surfaces such as tiles.

Some surfaces are likely to crack when a bore is drilled therethrough. Examples of such surfaces are tiles and stone. Tiles are drilled when, for example, an item such as a mirror is mounted on a tiled wall of a bathroom. To ensure the mirror is mounted properly, such that it is level and the tiles beneath are not cracked, it is common practice to mark the proposed site for the bore with a cross drawn in pencil. The mirror is held against the wall and a pencil is inserted into mounting holes provided in the mirror and the tile surface below is marked using the pencil. To try to prevent the tile from cracking during drilling, a piece of adhesive tape may be applied to the surface of the tile where the bore is to be drilled. However, there remains the risk that the tile will crack, particularly if the person using the drill is inexperienced in its use.

The present invention seeks to overcome the above problems by providing a drilling aid device. The present invention also provides a kit comprising a plurality of drilling aid devices and a drill bit, and packaging therefor. The present invention further provides a pack comprising a plurality of drilling aid devices.

In accordance with the present invention, there is provided a drilling aid device for guiding drill bits comprising a planar base having a circular opening through which, from a first end to a second end thereof, a drill bit is adapted to pass, the axis of the opening being perpendicular to the plane of the base; wherein the planar base is provided with at least one channel which is adapted to carry applied lubricant towards the second end of the opening.

Preferably, each channel extends in a direction that is parallel to the axis of the opening. Each channel may be adjacent to the opening. In a preferred embodiment, a plurality of channels are provided and are located at predetermined intervals about the axis of the opening. These channels may be located around the circumference of the opening. Preferably, one end of each channel is provided with a recessed portion which opens into the second end of the circular opening.

The ability to carry a lubricant towards the second end of the circular opening provides lubricant to the drill bit whilst the bore is being drilled. This assists the drilling process, meaning that the bore is neater and the surrounding surface is less likely to crack. The lubricant may also act to cool the drill bit. Preferably, the lubricant provided is water which is introduced into the channels prior to a bore being drilled. The channels act as wells and as conduits.
The planar base may be provided with at least one annular protrusion which is concentric with the circular opening. Preferably, the annular protrusion extends above the first end of the circular opening. The annular protrusion forms a collar for guiding the drill bit.

The annular protrusion may have a diameter which is smaller than that of the circular opening. In one embodiment, a plurality of annular protrusions are provided which are concentric and which decrease in diameter as they extend away from the circular opening, thereby forming a series of protrusions that is generally conical in shape.

The diameter of each annular protrusion may be dictated by the diameter of a standard drill bit. Thus, for example, in a series of three annular protrusions, a first annular protrusion may have a diameter of 8 mm, a second annular protrusion may have a diameter of 7 mm and a third annular protrusion may have a diameter of 6 mm. If a drill bit having a diameter of 6 mm is used, the drilling aid device can be used as provided. However, if the drill bit has a 7 mm or 8 mm diameter, then the smaller diameter protrusion(s) can be cut away to leave an annular protrusion having the correct diameter. The series of protrusions forms a collar for guiding the drill bit.

A drilling aid device having a collar for guiding a drill bit ensures that the drill bit is coaxial with the drilling aid device. This assists in making a neat and accurate bore and reduces or eliminates any cracking of the surrounding surface.

In a preferred embodiment, the planar base is provided with a plurality of indents or apertures positioned in the plane of the base and located at pre-determined intervals about the axis of the opening.

Preferably, the indents or apertures are located substantially symmetrically about the axis of the opening. Four indents or apertures may be provided. In a preferred embodiment, the planar base is approximately square-shaped and an indent is provided at each vertex of the square-shaped base. Each indent may be a V-shaped notch.

By providing indents or apertures in the plane of the base, a user is able to see, when the device is in use, a previously drawn pencil marking, such as a cross, locating the proposed bore site. Alternatively, the indents or apertures can be used to mark the correct position of the drilling aid device by making pencil markings in the spaces provided by the indents or apertures directly on the surface to be drilled. The device acts as a positioning guide. It allows an exact centrepoint to be marked.

Preferably the drilling aid device is provided with an adhesive for removably adhering the device to a surface. This assist a user when drilling a bore in a vertical surface.

In a preferred embodiment, the drilling aid device is provided with a stabilising rim. The stabilising rim may be co-axial with the circular opening. It has a greater diameter than that of the circular opening. It helps to stabilise the device on a surface.

A ring-shaped portion may be provided between the stabilising rim and the channels; the adhesive may be located in the ring-shaped portion.

The present invention is preferably used with diamond drill bits. These drill bits have an tip portion comprising diamond particles embedded in a soft metal matrix. The tip may be cylindrical in shape, have a diameter of, say, 8mm and a length of, say, 10 mm. As holes are drilled using the diamond drill bit, the tip wears down, exposing further diamond particles for use in drilling. These diamond drill bits are particularly useful in drilling hard surfaces such as those comprising porcelain tiles or quarry tiles.

Embodiments of the present invention will now be described, by way of example only, with reference to the accompanying diagrammatic drawings, in which:
Figure 1 is a perspective view of the top surface of a drilling aid device;
Figure 2 is a perspective view of the bottom surface of the drilling aid device; and
Figure 3 is a perspective view of the top surface of packaging containing a drill bit and a plurality of drilling aid devices.

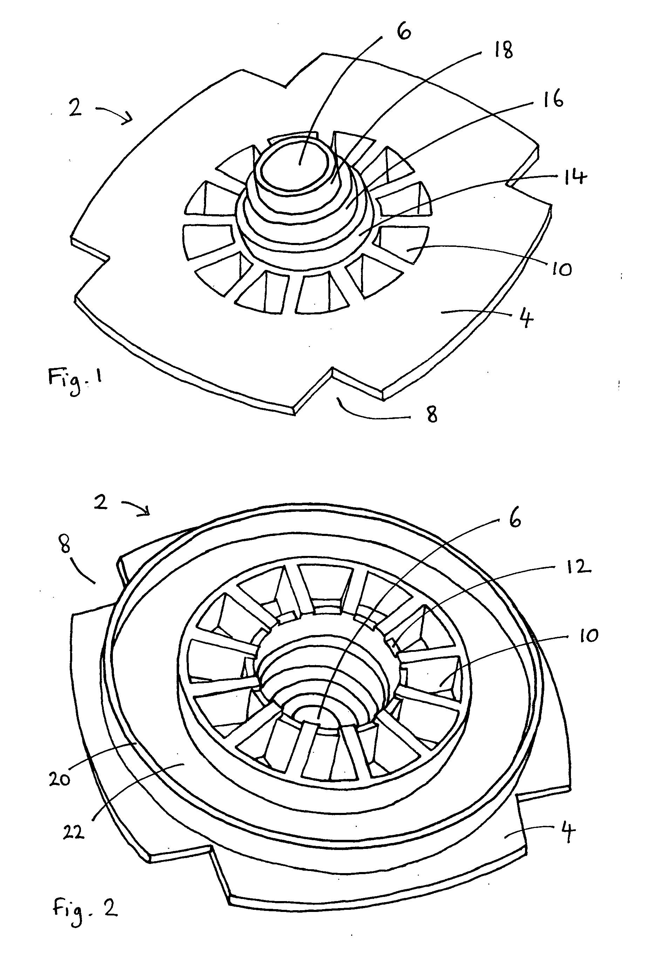

Referring to Figure 1, there is provided a drilling aid device 2 comprising a planar base 4 having an opening 6 through which a drill bit is adapted to pass. Since drill bits are circular in cross-section, the opening is also substantially circular in shape. The axis of the circular opening is perpendicular to the plane of the base. The base is approximately square-shaped, although other shapes, such as circles, triangles, pentagons and hexagons, may also be used.

Each corner of the square-shaped base is provided with a V-shaped notch 8. These notches allow a user to see any markings he has previously made to mark the proposed site of the bore to be drilled. The drilling aid device can subsequently be aligned with the markings, which may take the form of a cross. Alternatively, the notches can be used to mark the correct position of the drilling aid device by placing the device on the surface to be drilled and making pencil markings in the spaces provided by the notches directly on the surface. This allows the exact point to be drilled to be marked. The device thereby acts as a positioning guide. The notches may be a shape other than a V-shape; for example they may be circular in shape or may take the form of grooves. Instead of notches, apertures may be formed in the planar base; these may be any useful shape (eg. circular or square-shaped).

In an alternative embodiment, it is envisaged that the planar base of the device is transparent such that any markings on the surface to be drilled are visible therethrough. As a result, in this embodiment, the presence of indents or apertures in the planar base is not essential.

The base is provided with a series of channels 10. Each channel extends in a direction that is parallel to the axis of the circular opening. The channels are located around the circumference of the circular opening. The end of each channel adjacent the bottom face of the base is provided with a recessed portion, duct 12. Each duct opens into the end of the circular opening which is adapted to lie adjacent to the bore to be drilled. Consequently, water retained in the channels is directed to the site of drilling via the ducts.

As seen most clearly in Figure 1, the top face of the base is provided with a stacked drill bit guide collar. This comprises a series of annular protrusions that is generally conical in shape. The protrusions are concentric and decrease in diameter as they extend away from the circular opening. In Figure 1, three annular protrusions are shown. Annular protrusion 14 has the largest diameter and is located adjacent the base. Annular protrusion 16 has a smaller diameter and is located adjacent the first annular protrusion and a third annular protrusion. The third annular protrusion 18 has the smallest diameter and is located adjacent the second annular protrusion.

Referring to figure 2, the device has a stabilising rim 20 which is co-axial with the circular opening 6. A ring-shaped portion 22 is defined between the rim and the series of channels 10.

Low tack adhesive is provided in the ring-shaped portion. Alternatively, a high tack adhesive is provided in the ring-shaped portion. Whether a high or low tack adhesive is used depends on the material and orientation of the surface to be drilled: the device should remain stable during the drilling operation.

In one embodiment, a layer of adhesive is applied to the exposed surface of a flexible material which is located in the ring-shaped portion. This flexible material may be in the form of a resilient foam ring. The presence of this flexible material is useful when the device is adhered to uneven surfaces such as corrugated tiles. Its flexibility allows a greater proportion of the adhesive to adhere to the surface to be drilled, thereby better securing the device to the surface. In one embodiment, the flexible material is a resilient foam ring having a total depth of 2.5mm; 1mm of this depth is located in the ring-shaped portion of the device; the remaining 1.5mm protrudes below the device to provide a flexible cushion which sits on the surface to be drilled and is affixed thereto by the adhesive layer provided on the exposed surface of the foam ring.

To use the drilling aid device, a user marks where a bore is to be drilled. He then draws a large cross having its centre over the site of the proposed bore. If the drill bit to be used has a diameter which fits within the diameter of annular protrusion 18, then the drilling aid device is used as it is. However, if the diameter of annular protrusion 18 is too small, then this annular protrusion is removed to allow the drill bit to pass therethrough. Annular protrusion 16 is only removed if it too is too small for the drill bit. Consequently, the stacked drill bit guide collar is cut down to the size of the drill bit to be used. The annular protrusions thereby form a collar which acts as a directional guide for the drill bit. The collar also ensures that the drill bit is coaxial with the drilling aid device, resulting in the drill bit being aligned in a direction which is perpendicular to the surface to be drilled.

Once the stacked drill bit guide collar has been cut down to size (if necessary), the drilling aid device is placed in position on the surface to be drilled using the notches in the base to align the device correctly with the pencil markings. The stabilising rim is placed on the surface to be drilled, thereby stabilising the device. The adhesive acts to adhere temporarily the device to the surface. This is particularly useful on vertical surfaces so that a user can leave the device *in situ* and use both hands to steady the drill. The surface should be clean and dry so that the adhesive can affix the device securely thereto. The device should remain securely in place throughout the drilling process. If the adhesive does not affix the device securely, there is a possibility that the device will move during drilling, which would be detrimental to the drilling process. Once the device is securely in position, and just prior to drilling, a quantity of water is introduced into the channels around the stacked drill bit guide collar. This retains water in the channels to act as a lubricant during drilling. The drill bit is inserted through the annular protrusions and through the circular opening to make contact with the surface to be drilled. A bore is then made. After use, the device is readily removed from the drilled surface without leaving any adhesive residue. It is then disposed of.

In an alternative embodiment, a drill bit guide collar is provided that does not comprise a series of annular protrusions. Instead, the guide collar is a single annular protrusion that is concentric with the circular opening of the drilling aid device and has the same diameter as the circular opening. The annular protrusion has a diameter sized to fit a drill bit snuggly therein. For example, the annular protrusion has a diameter which allows an 8mm diameter drill bit to fit snuggly therein. A range of drilling aid devices are then provided, sized for drill bits having different diameters.

The drilling aid device is preferably moulded from a plastics material and, in one example, measures 30mm by 30mm.

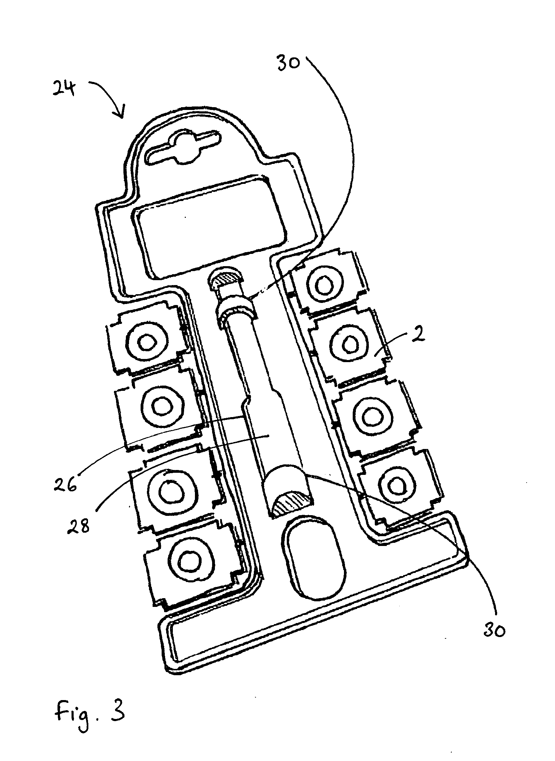

Referring to Figure 3, packaging 24 is provided for selling a kit of a drill bit and a plurality of drilling aid devices. The packaging comprises a cavity 26 for retaining the drill bit 28, together with retaining straps 30 to keep the drill bit *in situ* prior to use. The packaging also comprises a plurality of drilling aid devices 2. Eight are shown in the packaging of Figure 3. These devices are integrally moulded with the packaging. Thus, when a user is ready to drill a hole in a surface, he removes the drill bit from the packaging and also disconnects one of the drilling aid devices from the packaging. The remaining devices remain integrally connected to the packaging for use at a later date. It is also possible to make and sell packs of drilling aid devices alone. For example, a pack of twelve drilling aid devices. Preferably they are integrally moulded, with or without the packaging, and are each easily removable from the integral moulding. The drilling aid devices are disposable.

The packaging is manufactured by methods common in the art. The preferred method involves the use of a multi-impression moulding which is inserted into a base plate jig. This jig is recessed to fit a clamping tray neatly therein. The clamping tray is made from stainless steel and is adapted to receive a heavy steel cutter head incorporating a vacuum vent. Once the drilling aid devices have been moulded, the annular protrusions protrude through corresponding holes in the clamping tray. The blades of the cutter head slice off unwanted sections of the moulding, leaving annular protrusions having the correct diameter.

Packaging 24 may be enveloped in a transparent plastic moulding which acts to keep the components in place and to keep the components free from dust and dirt prior to use.

## Claims

1. A drilling aid device (2) for guiding drill bits comprising a planar base (4) having a circular opening (6) through which, from a first end to a second end thereof, a drill bit is adapted to pass, the axis of the opening being perpendicular to the planar base; wherein the planar base is provided with at least one channel (10) which is adapted to carry applied lubricant towards the second end of the circular opening.

2. A device as claimed in Claim 1, wherein the channel extends in a direction that is parallel to the axis of the opening

3. A device as claimed in Claim 1 or Claim 2, wherein the channel is adjacent to the circular opening.

4. A device as claimed in any preceding claim, wherein a plurality of channels are provided and are located at predetermined intervals about the axis of the opening.

5. A device as claimed in Claim 4, wherein the channels are located around the circumference of the circular opening.

6. A device as claimed in any preceding claim, wherein one end of each channel is provided with a recessed portion (12) which opens into the second end of the circular opening.

7. A device as claimed in any preceding claim, wherein the planar base is provided with at least one annular protrusion which is concentric with the circular opening.

8. A device as claimed in Claim 7, wherein the annular protrusion extends above the first end of the circular opening.

9. A device as claimed in Claim 7 or Claim 8, wherein the annular protrusion has a diameter which is smaller than that of the circular opening.

10. A device as claimed in Claim 9, comprising a plurality of annular protrusions which are concentric and which decrease in diameter as they extend away from the circular opening, thereby forming a series of protrusions that is generally conical in shape.

11. A device as claimed in any preceding claim, wherein the planar base is provided with a plurality of indents or apertures positioned in the plane of the base and located at pre-determined intervals about the axis of the opening.

12. A device as claimed in Claim 11, wherein the indents or apertures are located substantially symmetrically about the axis of the opening.

13. A device as claimed in Claim 11 or Claim 12, wherein four indents or apertures are provided.

14. A device as claimed in any one of Claims 11 to 13, wherein the planar base is approximately square-shaped and an indent is provided at each vertex of the square-shaped base.

15. A device as claimed in Claim 14, wherein each indent is a V-shaped notch (8).

16. A device as claimed in any preceding claim, provided with an adhesive for removably adhering the device to a surface.

17. A device as claimed in any preceding claim, provided with a stabilising rim (20).

18. A device as claimed in Claim 19, wherein the stabilising rim is co-axial with the circular opening (6).

19. A device as claimed in Claims 17 or 18 when dependent on Claim 16, wherein a ring-shaped portion (22) is provided between the stabilising rim and the channels and the adhesive is located in the ring-shaped portion.

20. Packaging for a drill bit comprising a plurality of drilling aid devices as claimed in any preceding claim integrally moulded therewith.

21. A kit comprising a drill bit and a plurality of drilling aid devices as claimed in any preceding claim.

22. A pack comprising a plurality of drilling aid devices as claimed in any preceding claim.
